# EUROPÄISCHE PATENTANMELDUNG

(11) **EP 1 022 541 A2**
(43) Veröffentlichungstag der Anmeldung: **26.07.2000**
(21) Anmeldenummer: 99125068.9
(22) Anmeldetag: 16.12.1999
(51) Int. Cl.: G01B 11/24, G01B 11/26, G01B 11/00

(54) **Verfahren und Vorrichtung zur Bestimmung der Geometrie von blattförmigem Gut oder Stapeln davon**

(30) Priorität: 22.01.1999 DE 19902401
(71) Anmelder: Wohlenberg Schneidesysteme GmbH, 30179 Hannover (DE)
(72) Erfinder: Nitidem-Ndengue, Etienne Dr.-Ing., 58300 Wetter (Ruhr) (DE); Müller, Thorsten Dr.-Ing., 30853 Langenhagen (DE); Hesse, Christian Dipl.-Ing., 30419 Hannover (DE)
(74) Vertreter: Patentanwälte Thömen & Körner

(57) **Zusammenfassung**

Es wird ein Verfahren zur Bestimmung der Geometrie von blattförmigem Gut oder Stapeln davon mittels Bildverarbeitung und -auswertung sowie eine Vorrichtung zur Durchführung des Verfahrens beschrieben.

Das blattförmige Gut wird auf einen Meßtisch mit einem Referenzgitter aus optischen Marken aufgelegt und wenigstens von den seitlichen Kanten des blattförmigen Gutes und daran angrenzenden Bereichen des Referenzgitters Bilder oder Teilbilder aufgenommen. Danach werden Koordinaten der optischen Marken identifiziert und auf Zeilen und Spalten zwischen diesen Marken Schnittpunkte mit seitlichen Kanten des blattförmigen Gutes ermittelt, Ausgleichsgeraden durch die Schnittpunkte errechnet und vier den Ecken des blattförmigen Gutes zugeordnete Schnittpunkte der Ausgleichsgeraden untereinander ermittelt und aus deren Koordinaten die Geometrie ermittelt.

## Beschreibung

Die Erfindung betrifft ein Verfahren zur Bestimmung der Geometrie von blattförmigem Gut oder Stapeln davon nach Anspruch 1 und eine Vorrichtung zur Durchführung des Verfahrens nach Anspruch 10.

Eine qualitätsbestimmende Kenngröße von geschnittenem blattförmigen Gut oder Stapeln davon ist die Schnittgenauigkeit. Die Schnittgenauigkeit wird außer durch Eigenschaften des blattförmigen Gutes selbst im wesentlichen durch die Schneidmaschine bestimmt. Als Schneidmaschine für autonome Stapel sind Schnellschneider und für gebundene Stapel, insbesondere Buchblocks sind Dreischneider üblich. Durch Überprüfung der Schnittgenauigkeit können Mängel an der Schneidmaschine festgestellt werden und so die Produktion von Ausschuß vermindert oder vermieden werden. Da eine stichprobenartige Prüfung der Schnittgenauigkeit Fehler erst mit Verzögerungen erkennen läßt, kann die Erkennungsverzögerung vermindert werden, wenn eine Überwachung in sehr kurzen Zeitabständen bis hin zu einer lückenlosen Überwachung ermöglicht wird.

Die Schnittgenauigkeit umfaßt die Maßgenauigkeit sowie die Winkeligkeit des blattförmigen Gutes und gegebenenfalls darüberhinaus die Winkeligkeit der Schnittflächen. Alle diese Parameter können auch unter dem Begriff "Geometrie" von blattförmigem Gut oder Stapeln davon zusammengefaßt werden.

Zur Erfassung von geometrischen Abmessungen können grundsätzlich verschiedene Wegmeßsensoren, die nach unterschiedlichen physikalischen Prinzipien arbeiten, eingesetzt werden. Allerdings ist die Bestimmung der gewünschten Abmessungen nur über eine große Anzahl von Meßschritten nötig, die eine aufwendige Mechanik erfordern.

Der Einsatz optischer Meßsysteme zur Erfassung der Geometrie führt zu einer zweidimensionalen Signalverarbeitung, die besonders bei hoher Auflösung sehr rechenintensiv ist. Darüber hinaus müssen auch Abbildungsfehler berücksichtigt werden. Derartige Abbildungsfehler haben zahlreiche Ursachen, von denen hier nur ein Teil aufgezählt werden soll. So ist bei realen Linsen der Brennpunkt davon abhängig, ob die Lichtstrahlen zentral oder mehr im Randbereich auf die Linse fallen. Dieser Fehler wirkt sich hauptsächlich auf die Kontur der Abbildung und damit auf die Bildschärfe aus. Durch Einsatz einer Blende läßt er sich weitgehend unterdrücken.

Allerdings führt die Kombination aus Blende und Linse wiederum zu einem Fehler, nämlich zu einer nicht linearen geometrischen Verzeichnung, z. B. einer tonnenförmigen oder einer kissenförmigen Verzeichnung. Weitere Verzerrungen können durch eine ungenaue Anordnung der Bildelemente auf der Sensoroberfläche sowie durch Welligkeit der Sensoroberfläche entstehen.

Der Erfindung liegt die Aufgabe zugrunde, ein Verfahren zur Bestimmung der Geometrie von blattförmigem Gut oder von Stapeln davon mittels Bildverarbeitung und -auswertung sowie eine Vorrichtung zur Durchführung des Verfahrens anzugeben, bei dem Abbildungsfehler automatisch ausgeglichen werden können und eine automatische Berechnung der Geometrie ermöglicht wird.

Diese Aufgabe wird bei einem Verfahren zur Bestimmung der Geometrie von blattförmigem Gut oder Stapeln davon durch die im Anspruch 1 angegebenen Merkmale gelöst und bei einer Vorrichtung zur Durchführung des Verfahrens durch die im Anspruch 10 angegebenen Merkmale gelöst.

Durch das Auflegen des blattförmigen Gutes auf ein Referenzgitter aus optischen Marken wird bei der Bildaufnahme das Referenzgitter und das blattförmige Gut gleichzeitig aufgenommen, so daß die Genauigkeit nur noch durch das Referenzgitter bestimmt wird, Abbildungsfehler hingegen kompensiert werden können.

Da es beim Auflegen des blattförmigen Gutes auf das Referenzgitter zu Überschneidungen der Kanten mit den optischen Marken kommen kann und die Kanten in diesen Bereichen nicht mehr identifiziert werden können, werden die Kanten mittelbar bestimmt. So werden Zeilen und Spalten zwischen denjenigen optischen Marken, die außerhalb der bedeckten Fläche liegen und damit frei sichtbar sind, gewonnen und die Schnittpunkte dieser Zeilen und Spalten mit den seitlichen Kanten des blattförmigen Gutes ermittelt. Hierbei ist sichergestellt, daß diese Zeilen und Spalten stets eindeutige Schnittpunkte mit den seitlichen Kanten des blattförmigen Gutes aufweisen.

Die Schnittpunkte werden dann zur Berechnung einer Ausgleichsgeraden herangezogen, die der zugehörigen Kante des blattförmigen Gutes entspricht. Stehen mehrere Schnittpunkte zur Verfügung, lassen sich auch kleine Toleranzen der ermittelten Schnittpunkte ausgleichen. Mit den vier Ausgleichsgeraden ist die Flächengeometrie des blattförmigen Gutes ausreichend bestimmt, so daß aus diesen Größen die genauen Abmessungen und die Winkel errechnet werden können.

Die Messung kann vereinfacht werden, wenn das blattförmige Gut auf dem Referenzgitter zusätzlich zwangsweise positioniert wird. Es ist dann nur noch erforderlich, drei oder auch nur zwei zusätzliche Kanten zu bestimmen, da eine oder zwei Kanten durch die Positionierung bereits festliegen. Eine Positionierung ist aber nicht unbedingt erforderlich, denn vom Prinzip her lassen sich alle vier Kanten des blattförmigen Gutes bestimmen und die Geometrie berechnen.

Bei einer Weiterbildung ist vorgesehen, daß zum Identifizieren von optischen Marken und Kanten des blattförmigen Gutes zuerst eine Binarisierung der Bilder oder Teilbilder vorgenommen wird, indem die Häufigkeit von einzelnen im Bild auftretenden Grauwerten ermittelt, dann ein Schwellwert gebildet wird und alle Grauwerte unterhalb der Schwelle einem ersten binären Wert und die übrigen einem zweiten binären Wert zugewiesen werden. Nach Binarisierung wird eine Kantendetektion vorgenommen, indem mit Hilfe eines Gradientenoperators die Konturen der im Bild liegenden Objekte ermittelt werden.

Die Binarisierung dient dazu, den Kontrast des Bildes durch Zuweisung von nur noch zwei unterschiedlichen Helligkeitsstufen zu erhöhen und dadurch die Datenmenge für den nachfolgenden Schritt zu reduzieren. Durch die anschließende Kantendetektion wird die Datenmenge der Bildinformationen auf die für die Auswertung einzig relevante Anzahl beschränkt.

Die optischen Marken können durch unterschiedliche rotationssymmetrische Objekte gebildet sein, deren Zentren auf vorbestimmten Koordinatenpunkten liegen und die durch unterschiedliche Ausgestaltung indiziert oder klassifiziert sind. Aus den Konturen der Objekte können ihre Schwerpunkte und ihre Indizes oder Klassen eindeutig bestimmt werden.

Durch die rotationssymmetrische Ausbildung der Objekte stehen genügend Bildinformationen zur Verfügung, um auch bei teilweiser Überdeckung das Zentrum zu ermitteln. Gleichzeitig enthalten die Objekte den Code für ihre Koordinaten selbst, wodurch eine zusätzliche Wegaufnahme zur Bestimmung der Koordinaten der Objekte entbehrlich ist. Dies kann lediglich dann erforderlich sein, wenn die Codierungsmöglichkeiten begrenzt sind und bei einer Anzahl von Objekten, die größer als die Zahl der Codierungsmöglichkeiten sind, sich daher die Objekte in einem bestimmten Abstand wiederholen müssen.

Bei einer praktischen Ausgestaltung der Erfindung werden die Teilbilder mittels einer Flächenkamera aufgenommen, die nacheinander in unterschiedliche, jeweils wenigstens eine Ecke des blattförmigen Gutes erfaßbare Positionen verbracht wird.

Durch diese Maßnahme kann auf eine hochauflösende Flächenkamera, die den gesamten Meßtisch in einem Bildausschnitt erfaßt, verzichtet werden. Da die Abstände der Objekte bekannt sind, reicht es aus, nur die Teilbilder der für die Berechnung der Geometrie relevanten Bereiche aufzunehmen und auszuwerten. Der Einsatz handelsüblicher Flächenkameras, die aufgrund ihrer Herstellung in Großserie sehr kostengünstig sind, ist dadurch möglich.

Werden die optischen Marken durch unterschiedliche Objekte gebildet, die sich aber nach Art eines Rapports in Zeilen- und Spaltenrichtung wiederholen, können auch die Abstände der Kamerapositionen in die Berechnung einbezogen werden. Hierbei reicht allerdings eine grobe Erfassung der zurückgelegten Wege zwischen den Kamerapositionen aus, da eine exakte Kalibrierung ja über die definierten Abstände der aufgenommenen optischen Marken selbst erfolgen kann.

Vorzugsweise ist das Referenzgitter transparent und von der der Kamera abgewandten Seite beleuchtet. Die Beleuchtung erfolgt somit nach dem Durchlichtverfahren, bei dem ein kontrastreiches Schattenbild entsteht. Da es ohnehin nur auf die Konturen ankommt, liefert das Schattenbild besonders gute Voraussetzungen für eine anschließende Binarisierung.

Ergänzend kann bei einem Stapel blattförmigen Gutes ein Schnittwinkel einer geschnittenen Fläche ermittelt werden, indem zusätzlich von der Seite des Stapels her Bilder oder Teilbilder aufgenommen werden, danach aufrechte Kanten des Stapels ermittelt werden und schließlich aus den aufrechten Kanten und den diese schneidenden zuvor ermittelten Ausgleichsgeraden die eingeschlossenen Winkel berechnet werden.

Für die räumliche Geometrie eines Stapels aus blattförmigem Gut, hier insbesondere einem gebundenen und geschnittenen Buchblock, wird also wenigstens eine weitere Kante ausgewertet, während die daran angrenzenden übrigen Kanten bereits zuvor ausgewertet wurden und daher in ihrer Länge und Ausrichtung bekannt sind. Zur Identifizierung der aufrechten Kanten des Stapels kann zuerst eine Dichteverteilung der verzerrten optischen Marken ermittelt werden und anschließend in den Randbereichen hoher Dichte eine Kantendetektion vorgenommen werden, indem mit Hilfe eines Gradientenoperators die Konturen der in diesem Bereich liegenden Objekte ermittelt werden.

Die Kantendetektion wird somit ähnlich wie bei der Detektion der seitlichen Kanten des blattförmigen Gutes vorgenommen. Dadurch können ähnliche Rechenalgorithmen verwendet werden.

Weiterhin ist vorgesehen, daß die von der Seite des Stapels aufgenommenen Bilder oder Teilbilder von derselben Flächenkamera über Umlenkspiegel erfaßt werden.

Diese Maßnahme ist mechanisch besonders einfach zu realisieren, da die Kamera in der gleichen Position verbleiben kann, in der auch die Bilder des auf dem Meßtisch liegenden blattförmigen Gutes von oben durchgeführt werden. Vorteilhaft ist dabei auch, daß eine gleiche Entzerrung der Bilder vorgenommen werden kann, wie sie automatisch bei der Erfassung der Bilder des blattförmigen Gutes von oben vorgenommen wurde.

Bei der erfindungsgemäßen Vorrichtung ist das Referenzgitter aus optischen Marken in der Ebene eines Meßtisches angeordnet, auf den das blattförmige Gut auflegbar ist. Die Bilder oder Teilbilder werden mittels einer Kamera erfaßt, auf deren Bildebene die Ebene des Meßtisches abgebildet wird. In einem mit der Kamera verbundenen Rechner wird programmgesteuert die Bestimmung der Geometrie von blattförmigem Gut oder Stapeln davon mittels Bildverarbeitung und -auswertung vorgenommen.

Die Anordnung des Referenzgitters aus optischen Marken in der Ebene des Meßtisches ermöglicht es, die optischen Marken und das blattförmige Gut in derselben Bildebene anzuordnen und damit im gleichen Abbildungsverhältnis auf der Bildebene der Kamera abzubilden. Durch den mit der Kamera verbundenen Rechner erfolgt eine unmittelbare Auswertung der Bilddaten.

Die Kamera kann zur Aufnahme von Teilbildern ausgelegt sein und mittels eines X-Y-Schlittens parallel relativ zur Ebene eines Meßtisches verfahrbar sein.

Bei dieser Ausgestaltung reichen Kameras mit handelsüblicher Bildauflösung aus, da nicht der gesamte Meßtisch gleichzeitig abgebildet werden muß. Vielmehr können nacheinander Teilbilder angefertigt, ausgewertet und gemeinsam berechnet werden.

Dabei können Wegaufnehmer, die mit dem X-Y-Schlitten verbunden sind, Daten über die Verfahrwege liefern, die dann zur Bestimmung der Geometrie des blattförmigen Gutes ausgewertet werden.

Vorzugsweise ist der Meßtisch transparent und auf der der Kamera gegenüber liegenden Seite des Meßtisches ist eine Beleuchtungsvorrichtung angeordnet.

Diese Maßnahme hat den Vorteil, daß nach dem Durchlichtverfahren gearbeitet werden kann und ein sehr hoher Kontrast der optischen Marken und der Kanten des blattförmigen Gutes gegenüber der Umgebung erzielt wird.

Nachfolgend wird die Erfindung anhand eines Ausführungsbeispiels erläutert, das in der Zeichnung veranschaulicht ist.

In der Zeichnung zeigen:
- Fig. 1: eine perspektivische Darstellung eines Prototyps der Erfindung
- Fig. 2: eine schematische Darstellung von Bildverarbeitungsoperationen
- Fig. 3: eine Darstellung der Teilbilder auf einem Bildschirm und
- Fig. 4: eine Darstellung des vom Spiegel wiedergegebenen Bildes
- Fig. 5: ein Flußdiagramm
- Fig. 6: eine schematische Darstellung der Vorgehensweise zur Berechnung von Geometrien aus Teilbildern

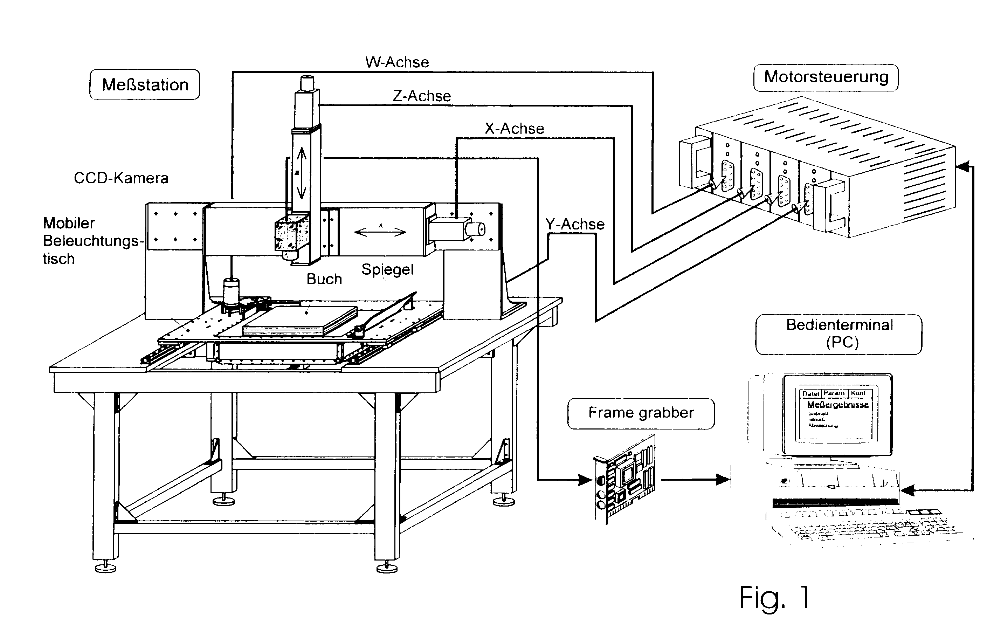

Fig. 1 zeigt eine Vorrichtung zur Bestimmung der Geometrie von blattförmigem Gut oder Stapeln davon. Die Vorrichtung umfaßt ein Grundgestell, auf dem ein Meßtisch mit einem Referenzgitter aus optischen Marken angebracht ist. Auf diesem Meßtisch befindet sich ein Meßobjekt aus blattförmigem Gut, hier ein Buch.

Unterhalb des Referenzgitters befindet sich eine Beleuchtungsvorrichtung und oberhalb ist an einem Portal eine Flächenkamera, nämlich eine CCD-Kamera angeordnet. Der Meßtisch sowie die Flächenkamera sind auf verfahrbaren Schlitten angebracht. Der Meßtisch ist in Richtung einer Y-Achse und die Kamera in Richtung einer X-Achse verfahrbar. Außerdem ist die Kamera noch senkrecht zur Ebene des Referenzgitters in Z-Richtung verfahrbar. Zusätzlich umfaßt der Meßtisch eine Positioniervorrichtung für das blattförmige Gut, die in einer W-Achse verfahrbar ist.

Während in der dargestellten Position die Flächenkamera nur Bilder von oben auf das Referenzgitter mit dem darauf liegenden blattförmigen Gut aufnehmen kann, ermöglicht ein auf dem Meßtisch angeordneter Spiegel auch die Aufnahme eines Bildes im rechten Winkel zu der vorgenannten Aufnahmeposition, nämlich auf die Seitenflächen des Buches.

Die von der Flächenkamera aufgenommenen Bilder werden als Daten über eine Bildverarbeitungskarte einem Rechner zugeführt, in dem eine Bildverarbeitung und Errechnung der Geometrie des Buches vorgenommen wird. Außerdem steuert der Rechner über eine Motorsteuerung die Achsen zum Verfahren des Meßtisches in Y-Richtung, der Kamera in X- und Z-Richtung sowie der Positioniervorrichtung in W-Richtung.

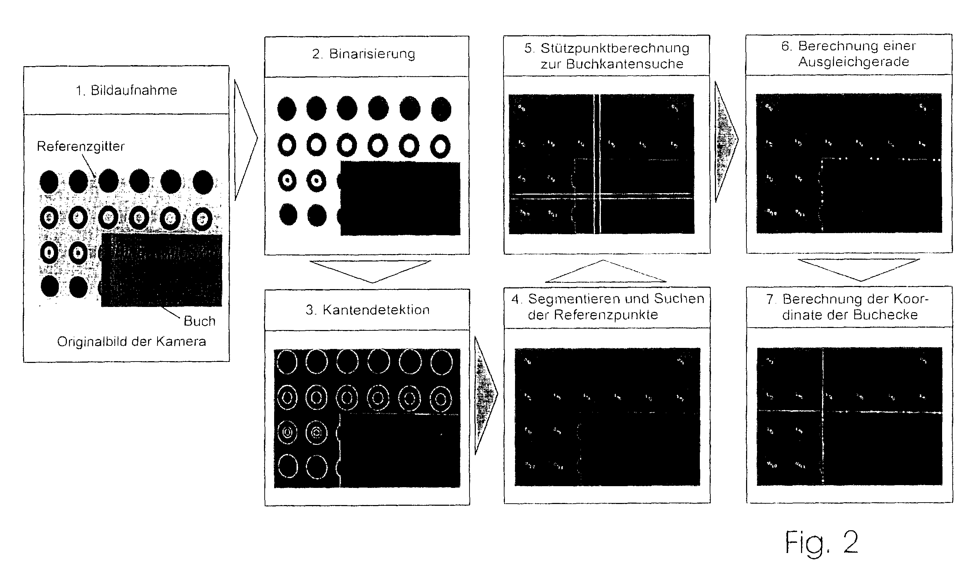

Fig. 2 zeigt eine schematische Darstellung der Bildverarbeitungsoperationen anhand einer Bildsequenz. Das erste Bild mit der Bezeichnung "Bildaufnahme" zeigt das von der Flächenkamera aufgenommene Originalbild. Durch das Durchlichtverfahren ist hier zwar bereits ein hoher Kontrast der auf dem Meßtisch angeordneten optischen Marken und der Kanten des auf dem Meßtisch liegenden Buches vorhanden, dennoch zeigt dieses Bild noch einige Graustufen, die z. B. durch Umgebungslicht erzeugt werden können.

Die folgenden Bilder zeigen bereits Resultate einer Bildverarbeitung durch den Rechner. So zeigt das zweite Bild mit der Bezeichnung "Binarisierung" eine Zuordnung der Helligkeitswerte der Bilddaten zu lediglich zwei Werten. Hierbei wird eine Häufigkeit von einzelnen im Bild auftretenden Grauwerten ermittelt. Dann wird zwischen dem Minimum und dem Maximum der Häufigkeit eine Schwelle eingerichtet und die unterhalb der Schwelle liegenden Grauwerte einem ersten binären Wert und die übrigen einem zweiten binären Wert zugewiesen. Somit entstehen dann sinngemäß Bilddaten, die nur die Werte weiß oder schwarz annehmen können und dadurch eine exakte Kantenerkennung ermöglichen.

Im dritten Bild ist diese Kantendetektion dargestellt. Dazu werden mit Hilfe eines Gradientenoperators die Konturen der im Bild liegenden Objekte ermittelt. Die Darstellung zeigt jetzt nur noch Bildkoordinaten, bei denen ein Wechsel von weiß auf schwarz oder umgekehrt erfolgt. Dies entspricht den Kanten der Objekte, wobei die Objekte auch mehrere Kanten aufweisen können, sowie den Kanten des blattförmigen Gutes.

In einem vierten Bild mit dem Titel "Segmentieren und Suchen der Referenzpunkte" werden aus den rotationssymmetrischen Kanten der Objekte die Schwerpunkte errechnet. Diese befinden sich auf definierten und daher dem System bekannten Koordinatenpositionen. Durch die unterschiedliche Ausgestaltung der Objekte ist eine eindeutige Identifizierung möglich. Zwar ist dem Ausführungsbeispiel nur eine unterschiedliche Ausbildung der Marken in einer Richtung veranschaulicht, in der Praxis ist es jedoch zweckmäßig, die Marken in beiden Koordinatenrichtungen unterschiedlich auszubilden, so daß aus der Gestaltung einer Marke eindeutig der Code für ihre Position im globalen Koordinatensystem ermittelt werden kann.

Die Zuordnung der Mittelpunkte und Breite der Marke ist wichtig für den nachfolgenden Schritt, der im fünften Bild als "Stützpunktberechnung zur Buchkantensuche" bezeichnet wird. Hier werden zwischen den einzelnen Marken in Zeilen- und Spaltenrichtung Hilfsgeraden gebildet, die sich aufgrund ihrer Anordnung mit keiner der Marken schneiden können. Dadurch sind ihre Schnittpunkte mit anderen Kanten eindeutig Schnittpunkte mit dem Kanten des blattförmigen Gutes. Je nach Breite und Abstand der einzelnen Marken können mehrere Stützpunkte, also Schnittpunkte der Geraden in Zeilen- und Spaltenrichtung mit den Kanten des blattförmigen Gutes erzeugt werden. Außerdem hängt die Anzahl der Stützpunkte natürlich auch von der Länge und Breite des blattförmigen Gutes ab.

Im sechsten Bild mit der Bezeichnung "Berechnung einer Ausgleichsgeraden" ist dargestellt, wie durch die auf etwa einer Linie liegenden Stützpunkte Ausgleichsgeraden gezogen werden. Diese Ausgleichsgeraden entsprechen den jeweiligen Kanten des blattförmigen Gutes. Sind mehrere Stützpunkte vorhanden, die zur Berechnung der Ausgleichsgeraden dienen, so werden eventuelle Toleranzen ausgeglichen, so daß die errechnete Ausgleichsgerade sehr exakt mit der Kante des blattförmigen Gutes übereinstimmt.

Schließlich werden im siebten Bild mit der Bezeichnung "Berechnung der Koordinate der Buchecken" die sich schneidenden Ausgleichsgeraden zweier Buchkanten dargestellt, wobei der Schnittpunkt einer Ecke des blattförmigen Gutes entspricht. Die Koordinaten dieser Schnittpunkte sind aufgrund der bekannten Koordinaten der Marken ebenfalls bekannt und somit lassen sich die Länge der Kanten und die Winkel, unter denen die Kanten stehen, berechnen.

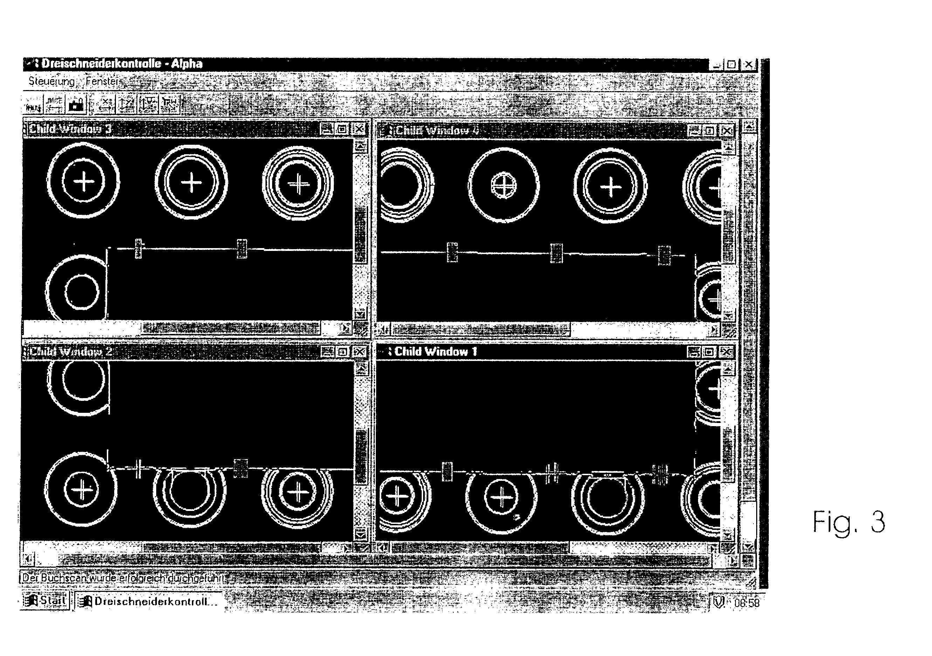

Fig. 3 zeigt eine Bildschirmdarstellung des Rechners, bei der auf dem Bildschirm vier Fenster mit den Darstellungen der vier Ecken eines Buches nebeneinander und untereinander angeordnet sind. Bei den Darstellungen handelt es sich bereits um die Wiedergabe der Marken und Kanten des blattförmigen Gutes nach Kantendetektion. In der Darstellung ist außerdem erkennbar, daß nunmehr die Marken alle unterschiedlich ausgestaltet sind, so daß sie bereits den Code ihrer Koordinaten umfassen.

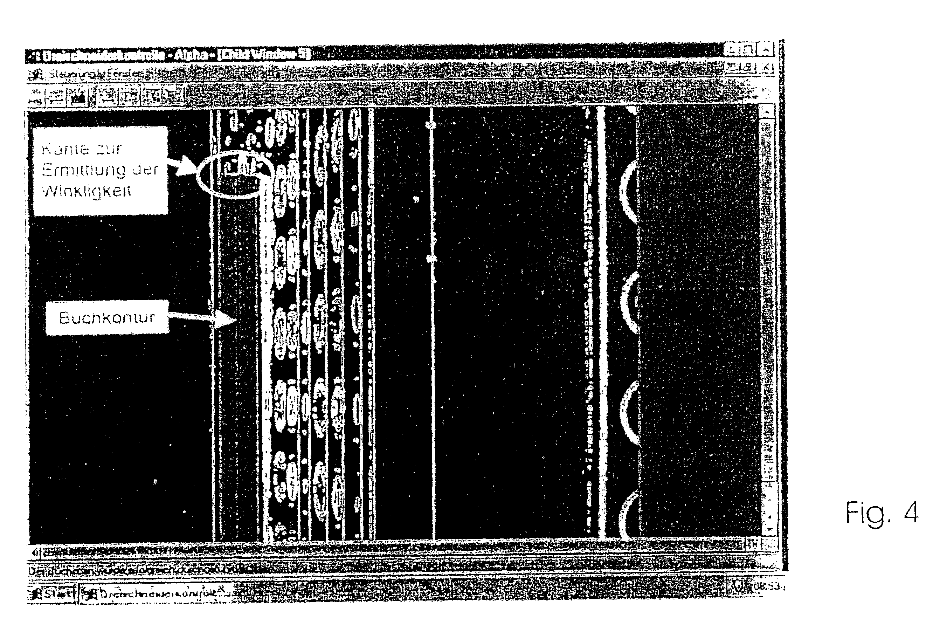

Fig. 4 zeigt ein Bild, in dem die aufrechten Kanten der Schnittflächen sichtbar sind. Durch eine geschickte Auswahl der abzuscannenden Bildbereiche mit Hilfe einer Dichteverteilung der verzerrten Referenzpunkte gelingt es, die Kanten der Kontur des blattförmigen Gutes sehr genau zu identifizieren. Die Bestimmung der Kanten kann dann etwa analog vorgenommen werden, wie bei den Seitenkanten weiter oben beschrieben.

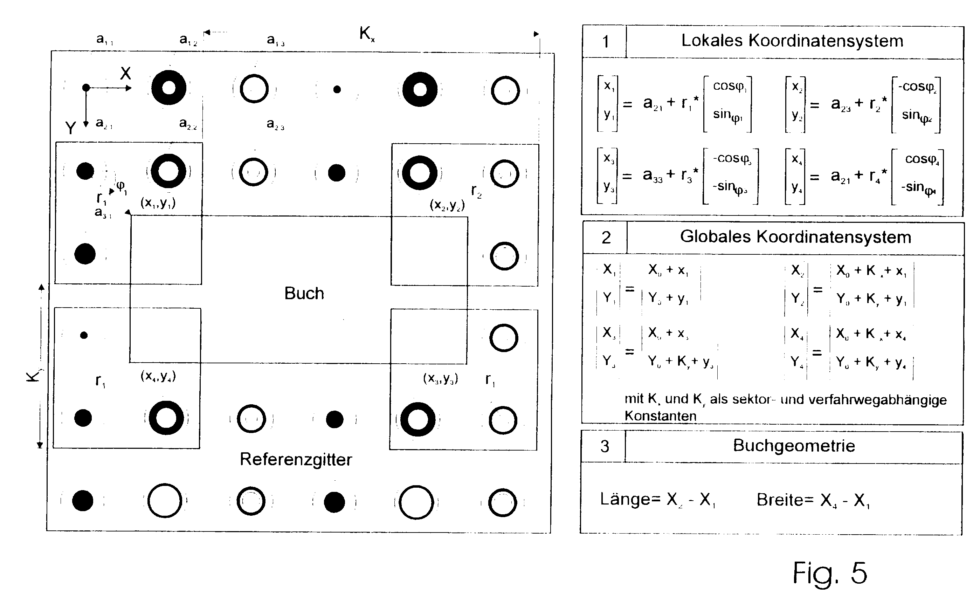

Fig. 5 zeigt eine schematische Darstellung der Vorgehensweise zur Berechnung der Geometrie aus Teilbildern. Der linke Bildteil hat Ähnlichkeit mit der Bildschirmdarstellung aus Fig. 4, zeigt jedoch zusätzlich die Indizes der Marken in Zeilenrichtung X und Spaltenrichtung Y, verfahrwegabhängige Konstanten Kₓ und K_{y} sowie Vektoren zwischen den Ecken des blattförmigen Gutes und der jeweiligen benachbarten Marke.

Der rechte Bildteil umfaßt Darstellungen der Koordinatensysteme in Vektorschreibweise und die Berechnung der Buchgeometrie. Im Feld 1 ist die relative Lage der Ecken des blattförmigen Gutes zur benachbarten Marke als lokales Koordinatensystem beschrieben, das zeigt. Im Feld 2 ist die Lage der Ecken des blattförmigen Gutes auf den Meßtisch bezogen als globales Koordinatensystem beschrieben, und zwar einmal ohne und einmal mit Einbeziehung von Verfahrwegen Kₓ und K_{y}. Im Feld 3 ist schließlich die Berechnung der Länge und Breite des blattförmigen Gutes dargestellt.

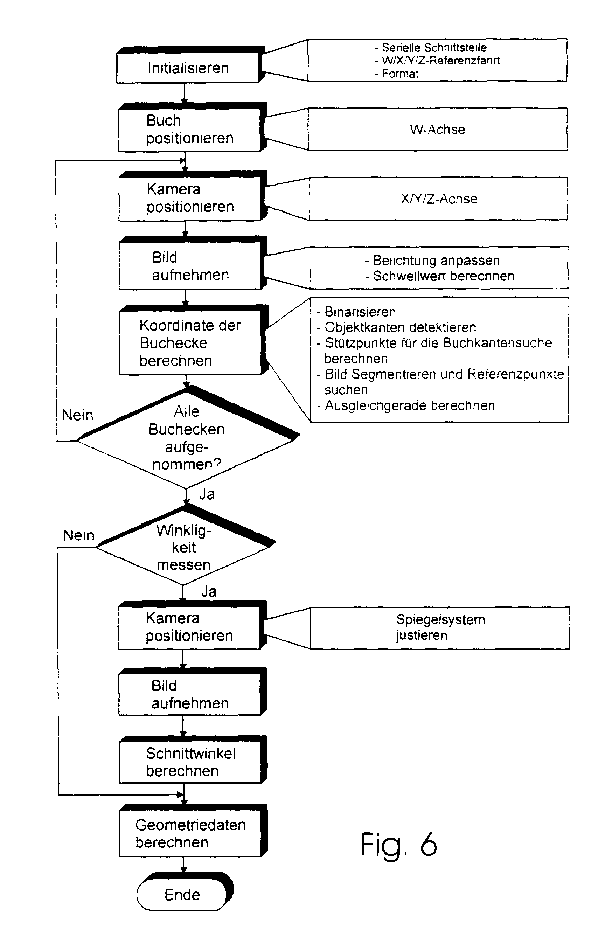

Fig. 6 zeigt ein Flußdiagramm, das den Bildverarbeitungsablauf darstellt. Zunächst wird die Vorrichtung initialisiert, d. h. in einen definierten Ausgangszustand gebracht. Anschließend wird das blattförmige Gut, hier ein Buch, positioniert. Dieser Schritt erleichtert und vereinfacht zwar die Messung, kann allerdings entfallen, wenn alle Kanten des blattförmigen Gutes ausgewertet werden.

Als nächstes wird die Kamera positioniert, so daß einmal die Abbildung scharf ist und zum anderen ein Teilbild einer Ecke des zu vermessenden blattförmigen Gutes gewonnen wird.

Danach wird ein Bild aufgenommen, wobei zur Optimierung des Kontrastes noch die Belichtung angepaßt werden kann. Anschließend wird der Schwellwert zur Aufteilung der Grauwerte in weiße und schwarze Werte ermittelt. Bei der anschließenden Berechnung werden nun die einzelnen Bildverarbeitungsoperationen vorgenommen, wie sie in Fig. 2 veranschaulicht sind. Dies wird für alle Ecken des blattförmigen Gutes nacheinander vorgenommen, wobei zwischenzeitlich die Kamera jeweils in die anderen Positionen verfahren wird. Nach der vollständigen Aufnahme und Bildverarbeitung von vier Teilbildern läßt sich die Flächengeometrie des blattförmigen Gutes berechnen.

Die nächsten Schritte im Flußdiagramm betreffen die Winkeligkeit der Schnittkanten.

Ist eine dreidimensionale Geometrie gewünscht, bei der auch die Winkeligkeit der Schnittkanten bestimmt werden soll, so ist zusätzlich die Kamera erneut zu positionieren und dabei das Spiegelsystem zu justieren, so daß nun mit derselben Kamera im rechten Winkel zur bisherigen Aufnahmerichtung auch die Schnittkanten erfaßt werden können. Dabei wird ein Bild aufgenommen, die Schnittwinkel analog der oben behandelten Bildverarbeitungsoperationen berechnet und in die Berechnung der Geometriedaten einbezogen.

## Patentansprüche

1. Verfahren zur Bestimmung der Geometrie von blattförmigem Gut oder Stapeln davon mittels Bildverarbeitung und -auswertung, bei dem das blattförmige Gut auf einen Meßtisch mit einem Referenzgitter aus in Zeilen und Spalten angeordneten, voneinander beabstandeten optischen Marken aufgelegt und wenigstens von den in der Draufsicht erscheinenden Kanten des blattförmigen Gutes und daran angrenzenden Bereichen des Referenzgitters Bilder oder Teilbilder aufgenommen werden, danach Koordinaten der optischen Marken identifiziert und Schnittpunkte von Geraden, die mit Abstand zu diesen zwischen die Zeilen und Spalten gelegt sind, mit den aufgenommenen Kanten des blattförmigen Gutes ermittelt werden, Ausgleichsgeraden durch die Schnittpunkte errechnet werden und vier den Ecken des blattförmigen Gutes zugeordnete Schnittpunkte der Ausgleichsgeraden untereinander ermittelt werden und schließlich aus den vier Schnittpunkten der Ausgleichsgeraden untereinander die Länge der Kanten und die zwischen den Kanten eingeschlossenen Winkel des blattförmigen Gutes berechnet werden.

2. Verfahren nach Anspruch 1, dadurch gekennzeichnet, daß zum Identifizieren von optischen Marken und Kanten des blattförmigen Gutes zuerst eine Binarisierung der Bilder oder Teilbilder vorgenommen wird, indem die Häufigkeit von einzelnen im Bild auftretenden Grauwerten ermittelt, dann ein Schwellwert gebildet wird und alle Grauwerte unterhalb der Schwelle einem ersten binären Wert und die übrigen einem zweiten binären Wert zugewiesen werden und nach der Binarisierung eine Kantendetektion vorgenommen wird, indem mit Hilfe eines Gradientenoperators die Konturen der im Bild liegenden Objekte ermittelt werden.

3. Verfahren nach Anspruch 1 oder 2, dadurch gekennzeichnet, daß die optischen Marken durch unterschiedliche rotationssymmetrische Objekte gebildet sind, deren Zentren auf vorbestimmten Koordinatenpunkten liegen und die durch unterschiedliche Ausgestaltung indiziert oder klassifiziert sind, und daß aus den Konturen der Objekte ihre Schwerpunkte und ihre Indizes oder Klassen eindeutig bestimmt werden.

4. Verfahren nach einem der Ansprüche 1 bis 3, dadurch gekennzeichnet, daß die Teilbilder mittels einer Flächenkamera aufgenommen werden, die nacheinander in unterschiedliche, jeweils wenigstens eine Ecke des blattförmigen Gutes erfaßbare Positionen verbracht wird.

5. Verfahren nach Anspruch 3 oder 4, dadurch gekennzeichnet, daß bei optischen Marken deren unterschiedliche Objekte sich nach Art eines Rapports in Zeilen- und Spaltenrichtung wiederholen, auch die Abstände der Kamerapositionen in die Berechnung einbezogen werden.

6. Verfahren nach einem der Ansprüche 1 bis 5, dadurch gekennzeichnet, daß das Referenzgitter transparent ist und von der der Kamera abgewandten Seite beleuchtet wird.

7. Verfahren nach einem der Ansprüche 1 bis 3, dadurch gekennzeichnet, daß bei einem Stapel blattförmigen Gutes ein Schnittwinkel einer geschnittenen Fläche ermittelt wird, indem zusätzlich von der Seite des Stapels Bilder oder Teilbilder aufgenommen werden, danach aufrechte Kanten des Stapels ermittelt werden und schließlich aus den aufrechten Kanten und den diese schneidenden, zuvor ermittelten Ausgleichsgeraden die eingeschlossenen Winkel berechnet werden.

8. Verfahren nach Anspruch 7, dadurch gekennzeichnet, daß zum Identifizieren der aufrechten Kanten des Stapels zuerst eine Dichteverteilung der verzerrten optischen Marken ermittelt wird und anschließend in den Randbereichen hoher Dichte eine Kantendetektion vorgenommen wird, indem mit Hilfe eines Gradientenoperators die Konturen der in diesem Bereich liegenden Objekte ermittelt werden.

9. Verfahren nach Anspruch 7 oder 8, dadurch gekennzeichnet, daß die von der Seite des Stapels aufgenommenen Bilder oder Teilbilder von derselben Flächenkamera über Umlenkspiegel erfaßt werden.

10. Vorrichtung zur Bestimmung der Geometrie von blattförmigem Gut oder Stapeln davon mittels Bildverarbeitung und -auswertung, mit
- einem Meßtisch mit einem Referenzgitter aus in Zeilen und Spalten angeordneten, voneinander beabstandeten optischen Marken, auf den das blattförmige Gut auflegbar ist,
- einer Kamera zur Aufnahme von Bildern oder Teilbildern wenigstens der in der Draufsicht erscheinenden Kanten des blattförmigen Guts und daran angrenzender Bereiche des Referenzgitters,
- einem Rechner zur programmgesteuerten Bildverarbeitung und -auswertung der von der Kamera gelieferten Bilddaten, der die Koordinaten der optischen Marken identifiziert, Schnittpunkte von Geraden, die mit Abstand zu diesen zwischen die Zeilen und Spalten der Marken gelegt sind, mit den aufgenommenen Kanten des blattförmigen Gutes ermittelt, Ausgleichsgeraden durch die Schnittpunkte errechnet, vier den Ecken des blattförmigen Gutes zugeordnete Schnittpunkte der Ausgleichsgeraden ermittelt und aus den vier Schnittpunkten der Ausgleichsgeraden untereinander die Länge der Kanten und die zwischen den Kanten eingeschlossenen Winkel des blattförmigen Gutes berechnet.

11. Vorrichtung nach Anspruch 10, dadurch gekennzeichnet, daß die Kamera zur Aufnahme von Teilbildern ausgelegt ist und mittels eines X-Y-Schlittens parallel zur Ebene eines Meßtisches verfahrbar ist.

12. Vorrichtung nach Anspruch 11, dadurch gekennzeichnet, daß der X-Y-Schlitten Wegaufnehmer umfaßt, die ebenfalls mit dem Rechner verbunden sind, und daß die von den Wegaufnehmern gelieferten Daten der Verfahrwege zur Bestimmung der Geometrie des blattförmigen Gutes ausgewertet werden.

13. Vorrichtung nach einem der Ansprüche 10 bis 12, dadurch gekennzeichnet, daß der Meßtisch transparent ist und auf der der Kamera gegenüberliegenden Seite des Meßtisches eine Beleuchtungsvorrichtung angeordnet ist.
